Europäisches Patentamt

European Patent Office

Office européen des brevets

(11) Veröffentlichungsnummer: **0 326 522 B1**

# (12) EUROPÄISCHE PATENTSCHRIFT

(45) Veröffentlichungstag der Patentschrift:
06.03.91 Patentblatt 91/10

(51) Int. Cl.⁵: **F16B 21/04, F16B 5/10**

(21) Anmeldenummer: **89810066.4**

(22) Anmeldetag: **25.01.89**

---

(54) Verbindungselement, insbesondere zum Verbinden der Seitenwände eines Versorgungskörpers mit Säulen eines Raumteilers.

---

(30) Priorität: **28.01.88 CH 292/88**

(43) Veröffentlichungstag der Anmeldung:
**02.08.89 Patentblatt 89/31**

(45) Bekanntmachung des Hinweises auf die Patenterteilung:
**06.03.91 Patentblatt 91/10**

(84) Benannte Vertragsstaaten:
**AT BE CH DE ES FR GB IT LI NL SE**

(56) Entgegenhaltungen:
**US-A- 3 480 311**
**US-A- 3 811 154**
**US-A- 4 194 429**
**LIGHT METALS, Band 11, Nr. 126, Juli 1948, Seite 414**

(73) Patentinhaber: **EMBRU-WERKE, MANTEL & CIE**
**Rapperswilerstrasse 33**
**CH-8630 Rüti (CH)**

(72) Erfinder: **Rütsche, Wendolin**
**Talgartenstrasse 53b**
**CH-8630 Rüti (CH)**
Erfinder: **Menzi, Rudolf**
**Curtibergstrasse 51**
**CH-8646 Wagen (CH)**

(74) Vertreter: **Münch, Otto et al**
**Patentanwalts-Bureau Isler AG**
**Walchestrasse 23**
**CH-8006 Zürich (CH)**

---

## Beschreibung

Ein Verbindungselement gemäss Oberbegriff des Anspruchs 1 ist allgemein bekannt. Es handelt sich um einen Bajonettverbinder, dessen Riegel durch fluchtende Langlöcher in zwei Bauteilen gesteckt wird, worauf der Verbinder an seinem Kopf mittels eines Schlüssels um 90° gedreht wird. Die beiden Bauteile sind dann zwischen Kopf und Riegel eingespannt.

Der vorliegenden Erfindung liegt die Aufgabe zugrunde, ein Verbindungselement der eingangs genannten Art derart weiterzubilden, dass die beiden zu verbindenden Bauteile durch das Verbindungselement gleichzeitig auf Abstand voneinander gehalten werden. Diese Aufgabe wurde an und für sich gelöst durch das Verbindungselement nach der US-A-4.194.429. Dieses Element ist aber nicht einstückig, würde daher ein gleichzeitiges Durchführen durch die Uffnungen in beiden Banteilen nicht gestatten und ist somit aufwendiger.

Das erfindungsgemässe Verbindungselement eignet sich insbesondere zum Verbinden der Seitenwände von Versorgungskörpern mit den Säulen eines Raumteilers. In dieser Anwendung kann wegen der erfindungsgemässen Ausbildung des Verbindungselementes die Breite des Versorgungskörpers etwas geringer gehalten werden als die lichte Weite zwischen benachbarten Säulen. Dadurch ist es möglich, die Versorgungskörper des Raumteilers einzeln aus- und einzubauen, ohne dass der ganze Raumteiler demontiert werden muss. Der Raumteiler kann deshalb sehr rasch und einfach an ändernde Bedürfnisse angepasst werden.

Nachfolgend wird ein Ausführungsbeispiel der Erfindung anhand der Zeichnung erläutert. Darin zeigt :

Fig. 1 eine Stirnansicht eines erfindungsgemässen Verbindungselementes,
Fig. 2 und 3 Schnitte längs den Linien II-II beziehungsweise III-III in Fig. 1,
Fig. 4 und 5 Schnitte längs den Linien IV-IV beziehungsweise V-V in Fig. 2,
Fig. 6 einen Vertikalschnitt durch eine Verbindung, enthaltend das Verbindungselement gemäss Fig. 1-5 vor dessen Drehen,
Fig. 7 die Ansicht VII in Fig. 6,
Fig. 8 und 9 Schnitte längs den Linien VIII-VIII beziehungsweise IX-IX in Fig. 6,
Fig. 10 bis 13 die den Fig. 6 bis 9 entsprechenden Darstellungen nach dem Drehen des Verbindungselementes,
Fig. 14 einen Vertikalschnitt durch einen Versorgungskörper, und
Fig. 15 eine Oeffnung in der Seitenwand des Versorgungskörpers.

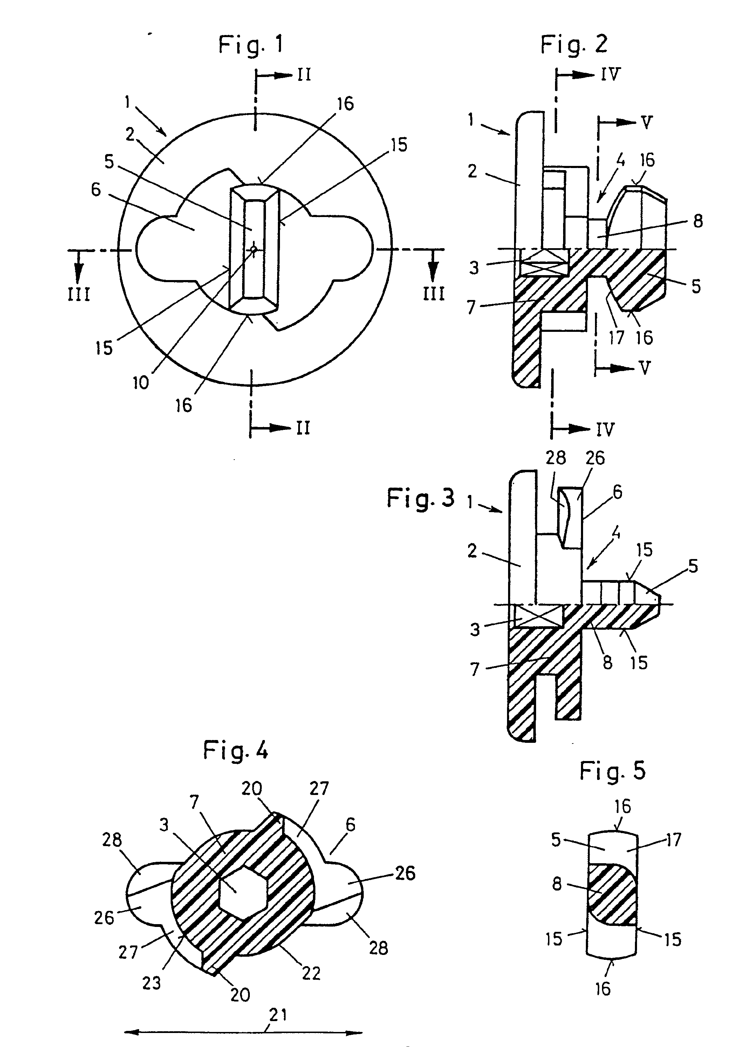

Das Verbindungselement gemäss Fig. 1 bis 5 ist einstückig aus einem thermoplastischen, vorzugsweise faserarmierten Kunststoff hergestellt und axialsymmetrisch zur Längsachse 10 aufgebaut. Es hat einen scheibenförmigen, runden Kopf 2 mit einem Innensechskant 3, einen Schaft 4 und einen ersten Riegel 5. Mit Abstand von und zwischen dem Riegel 5 und dem Kopf 2 befindet sich ein zweiter Riegel 6, der den Schaft 4 in einen kopfseitigen ersten Schaftabschnitt 7 und einen zwischen den Riegeln 5, 6 liegenden Schaftabschnitt 8 unterteilt. Der Riegel 5 hat zwei parallele Seitenflächen 15 und zwei zylindrische Flächen 16. Dem Kopf 2 zugewandt, hat er eine sphärische Anlagefläche 17. Gegen das freie Ende ist der Riegel 5 in Achsrichtung beidseits keilförmig verjüngt.

Der Querschnitt des Schaftabschnittes 8 ist annähernd rechteckförmig, wobei zwei gegenüberliegende Kanten zylindrisch abgerundet sind. Der Schaftabschnitt 7 hat zwei sich diametral gegenüberliegende, radial abstehende Nasen 20. Diese sind gegenüber der Richtung 21 grösster Weite des zweiten Riegels 6 um etwa 70° versetzt. In Umfangsrichtung auf der längeren Seite in Richtung zum Riegel 6 hin hat der Schaftabschnitt 7 eine zylindrische Umfangsfläche 22, deren Radius etwa dem Radius der Flächen 16 des Riegels 5 entspricht. Die an der anderen Seite an die Nasen 20 anschliessenden zylindrischen Umfangsflächen 23 haben einen grösseren Radius und erstrecken sich bis über die Richtung 21 hinaus. Die Richtung 21 grösster Weite des Riegels 6 ist gegenüber der Längserstreckung des Riegels 5 um 90° versetzt. Der Riegel 6 hat auf dieser grössten Weite, die geringer ist als der Durchmesser des Kopfes 2, halbkreisförmige Lappen 26. Auf der Seite der Umfangsfläche 23 gehen diese Lappen 26 in einen bogenförmigen Flansch 27 vom Radius der Nasen 20 über, der an die betreffende Nase anschliesst. Auf der Seite der Umfangsfläche 22 gehen hingegen die Lappen 26 in diese Umfangsfläche 22 über. Auf der dem Kopf 2 zugewandten Seite haben die Lappen 26 Keilflächen 28.

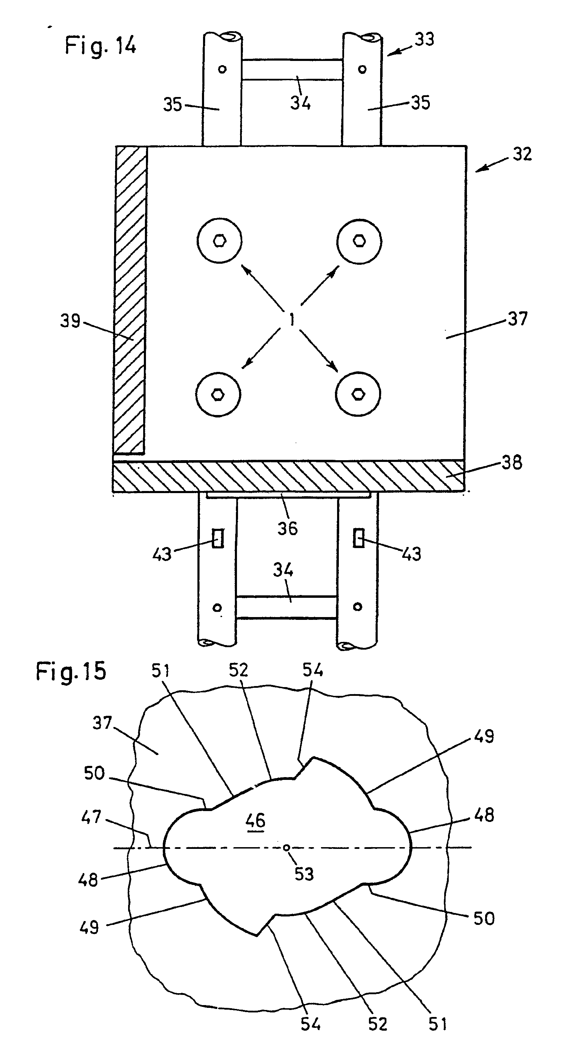

In Fig. 14 ist eine bevorzugte Verwendung des Verbindungselementes 1 dargestellt, nämlich die Befestigung eines Versorgungskörpers 32 an Säulen 33 eines Raumteilers. Der Versorgungskörper 32 ist zur Aufnahme von Büroutensilien gedacht. Die Säule 33 besteht aus zwei vertikalen, parallelen mittels horizontaler Verbindungsstangen 34 miteinander verbundenen Rohren 35. An einer der Verbindungsstangen 34 ist ein L-förmiger Tablarträger 36 eingehängt, der den Versorgungskörper 32 trägt. Der Versorgungskörper hat zwei Seitenwände 37 aus Blech, die an ihrem unteren Rand stirnseitig an einer Bodenplatte 38 festgeschraubt sind. An der hinteren Seite ist an den Seitenwänden 37 eine Rückwand 39 befestigt. Vorn kann der Versorgungskörper 32 durch eine Klappe verschliessbar sein, oder es können an den Seitenwänden 37 Führungsschienen für eine Schublade befestigt sein. Die Verbindungselemente 1 dienen zum raschen Verbinden der Seitenwände 37 mit den Rohren 35. Dazu haben die Rohre 35 rechteckige, hochgestellte Durchgangslöcher 43 zum Durchtritt des ersten Riegels 5. Die Seitenwände 37 haben vier in Fig. 15 detaillierter dargestellte, zentralsymmetrische Oeffnungen 46 zum Durchtritt des zweiten Riegels 6. Entsprechend den Lappen 26 hat die Oeffnung 46 im Bereich der grössten Weite auf einer horizontalen Achse 47 zwei halbkreisförmige Segmente 48. Anschliessend an die Segmente 48 folgt im Umriss der Oeffnung 46 auf der einen Seite ein Kreissegment 49 für den Durchtritt der Flansche 27. Auf der anderen Seite der Segmente 48 ist der Umriss stärker verengt. Ein etwa parallel zur Achse 47 verlaufender, kurzer, ans Segment 48 tangential anschliessender Abschnitt 50 geht über in einen weiteren geraden Abschnitt 51, der tangential in ein Kreissegment 52 übergeht. Das Kreissegment 52 ist konzentrisch zum Zentrum 53 der Oeffnung 46 und sein Radius entspricht dem Radius der Umfangsfläche 23 des ersten Schaftabschnittes 7 des Verbindungselementes 1. Das Segment 52 schneidet die Senkrechte zur Achse 47 durchs Zentrum 53. Ein kurzes, geradliniges Uebergangsstück 54 verbindet das Segment 52 mit dem Segment 49. Das Uebergangsstück 54 ist gegenüber der Radialrichtung geneigt und dient als Anschlag für die Nase 20 in der ungespannten Lage des Verbindungselementes 1. In der um 90° gedrehten, gespannten Lage liegt die Nase 20 am Abschnitt 50 an.

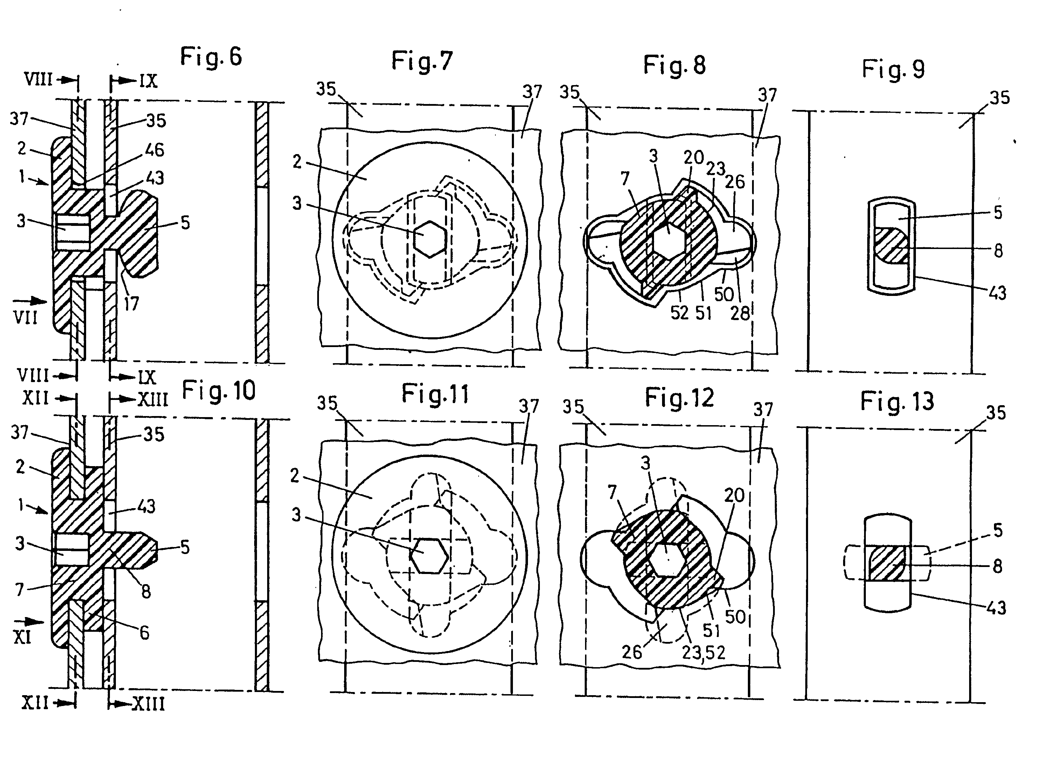

In den Fig. 6 bis 9 ist das Verbindungselement nach dem Einsetzen in die Oeffnung 46 der Seitenwand 37 und das Loch 43 des Rohres 35 gezeigt. Beim Drehen des Verbindungselementes 1 mittels eines Inbusschlüssels laufen die Keilflächen 28 hinter den Abschnitten 50, 51 des Oeffnungsumfangs auf, so dass die Wand 37 zwischen Kopf 2 und Riegel 6 fest eingespannt wird. Gleichzeitig läuft die sphärische Anlagefläche 17 des Riegels 5 an der Innenwand des Rohres 35 auf, so dass das Rohr 35 zwischen den Riegeln 5, 6 eingespannt wird. Fig. 10 bis 13 zeigen die gespannte Lage des Verbindungselementes 1, in welcher die Nasen 20 am Abschnitt 50 anliegen. Die Umfangsflächen 23 des Schaftabschnittes 7 sind dabei in den Kreissegmenten 52 der Oeffnung 46 zentriert (Fig. 12).

## Ansprüche

1. Verbindungselement zum Verbinden eines ersten Bauteils (37) mit einem zweiten Bauteil (35), insbesondere zum Verbinden der Seitenwände (37) eines Versorgungskörpers (32) mit Säulen (33) eines Raumteilers, umfassend einen Kopf (2) zur Anlage an der einen Seite des ersten Bauteils (37), wobei der Kopf (2) Schlüsseleingriffsflächen (3) aufweist, einen am Kopf (2) angeformten Schaft (4) zum gleichzeitigen Durchführen durch je eine Oeffnung (43, 46) in den beiden Bauteilen (35, 37), sowie einen am freien Schaftende angeformten ersten Riegel (5) zum Hintergreifen des zweiten Bauteils (35), dadurch gekennzeichnet, dass zwischen dem Kopf (2) und dem ersten Riegel (5) ein zweiter Riegel (6) am Schaft (4) angeformt ist, der gegenüber dem ersten Riegel (5) winkelmässig versetzt ist und in Achsrichtung sowohl vom Kopf (2) als auch vom ersten Riegel (5) Abstand hat.

2. Verbindungselement nach Anspruch 1, dadurch gekennzeichnet, dass die beiden Riegel (5, 6) um 90° gegeneinander versetzt sind, und dass der zweite Riegel (6) länger ist als der erste.

3. Verbindungselement nach Anspruch 2, dadurch gekennzeichnet, dass der erste Schaftabschnitt (7) zwischen dem zweiten Riegel (6) und dem Kopf (2) zwei diametral gegenüberliegende Nasen (20) aufweist, die gegenüber dem zweiten Riegel (6) winkelmässig versetzt sind.

4. Verbindungselement nach Anspruch 3, dadurch gekennzeichnet, dass die Umfangsfläche des ersten Schaftabschnittes (7) auf einer Seite je an die beiden Nasen (20) anschliessend kreiszylindersegmentförmige erste Abschnitte (23) aufweist, deren Durchmesser grösser ist als die Länge des ersten Riegels (5), und dass die auf der anderen Seite an die Nasen (20) anschliessenden zweiten Umfangsflächenabschnitte (22) gegenüber den ersten Abschnitten (23) im Durchmesser vermindert sind.

5. Verbindungselement nach einem der Ansprüche 1 bis 4, dadurch gekennzeichnet, dass der zweite Riegel (6) zwei diametral gegenüberliegende, dem Kopf (2) zugewandte Keilflächen (28) aufweist.

6. Verbindungselement nach einem der Ansprüche 1 bis 5, dadurch gekennzeichnet, dass die dem zweiten Riegel (6) zugewandte Fläche (17) des ersten Riegels (5) annähernd sphärisch ist.

7. Verbindungselement nach einem der Ansprüche 1 bis 6, dadurch gekennzeichnet, dass der erste Riegel (5) in Achsrichtung sowohl in der Breite als auch in der Länge keilförmig verjüngt ist.

8. Verbindungselement nach einem der Ansprüche 1 bis 7, dadurch gekennzeichnet, dass die Schlüsseleingriffsflächen als Innenmehrkant (3) und der Kopf (2) als runde Scheibe ausgebildet sind.

9. Raumteiler, umfassend mehrere Tragsäulen (33) und zwischen diese auswechselbar eingesetzte Versorgungskörper (32) bestehend aus zwei Seitenwänden (37), die mit einer Bodenplatte (38) und einer Rückwand (39) verbunden sind, wobei die Seitenwände (37) je mit mindestens einem Verbindungselement (1) gemäss einem der Ansprüche 1 bis 8 mit den Säulen (33) verbunden sind.

10. Versorgungskörper (32) für einen Raumteiler, umfassend zwei Seitenwände (37), die an einer Bodenplatte (38) und einer Rückwand (39) befestigt sind, wobei beide Seitenwände (37) zur Befestigung

mittels je mindestens eines Verbindungselementes (1) gemäss Anspruch 3 ausgebildet sind, wobei die Seitenwände (37) je mindestens eine Oeffnung (46) haben mit folgendem, bezüglich des Oeffnungszentrums (53) zentralsymmetrischem Umriss :

a) Die grösste Weite erstreckt sich horizontal parallel zur Bodenplatte (38) ;

b) Gegen die Vertikale ist der Umriss ausgehend von der grössten Weite auf einer Seite mehr verengt als auf der anderen ;

c) Die stärker verengte Seite mündet in einem zum Oeffnungszentrum (53) konzentrischen Kreissegment (52), das die Vertikale schneidet.

## Claims

1. Connection element for connecting a first component (37) to a second component (35), in particular for connecting the side walls (37) of a supply body (32) to columns (33) of a room divider, comprising a head (2) for bearing on one side of the first component (37), with the head (2) having key engagement surfaces (3), a shank (4) formed on the head (2) for passing through one opening (43, 46) each in the two components (35, 37) simultaneously, and also a first bar (5) formed on to the free shank end for engaging behind the second component (35), characterised in that a second bar (6) is formed on to the shank (4) between the head (2) and the first bar (5), which second bar is angularly offset relative to the first bar (5) and is at a distance both from the head (2) and from the fist bar (5) in the axial direction.

2. Connection element according to Claim 1, characterised in that the two bars (5, 6) are offset by 90° with respect to each other, and that the second bar (6) is longer than the first.

3. Connection element according to Claim 2, characterised in that the first shank section (7) has between the second bar (6) and the head (2) two diametrically opposing lugs (20) which are angularly offset relative to the second bar (6).

4. Connection element according to Claim 3, characterised in that the peripheral surface of the first shank section (7) has first sections (23) in the shape of segments of circular cylinders on one side each adjacent to the two lugs (20), the diameter of which sections is greater than the length of the first bar (5), and that the second circumferential surface sections (22) adjacent to the lugs (20) on the other side have a reduced diameter compared with the first sections (23).

5. Connection element according to one of Claims 1 to 4, characterised in that the second bar (6) has two diametrically opposed wedge faces (28) facing the head (2).

6. Connection element according to one of Claims 1 to 5, characterised in that the surface (17) of the first bar (5) which faces the second bar (6) is approximately spherical.

7. Connection element according to one of Claims 1 to 6, characterised in that the first bar (5) is tapered in a wedge shape in the axial direction both in width and in length.

8. Connection element according to one of Claims 1 to 7, characterised in that the key engagement surfaces are designed as a polygonal recess (3) and the head (2) as a round disc.

9. Space divider, comprising a plurality of supporting columns (33) and, interchangeably inserted therebetween, supply bodies (32) consisting of two side walls (37) which are connected to a base plate (38) and a back wall (39), with the side walls (37) each being connected to the columns (33) by at least one connection element (1) according to one of Claims 1 to 8.

10. Supply body (32) for a room divider, comprising two side walls (37) which are attached to a base plate (38) and a back wall (39), both side walls (37) each being designed for attachment by means of at least one connection element (1) according to Claim 3, the side walls (37) each having at least one opening (46) with the following outline which is centrosymmetrical with respect to the centre (53) of the opening :

a) the maximum width extends horizontally parallel to the base plate (38) ;

b) towards the vertical the outline is more narrowed on one side than on the other, starting from the maximum width ;

c) the side which is more greatly narrowed opens into a segment (52) of a circle which is concentric to the centre (53) of the opening and intersects the vertical.

## Revendications

1. Elément de connexion destiné à la liaison d'un premier élément composant (37) avec un second élément composant (35), notamment pour la liaison des parois latérales (37) d'un corps (32) avec des colonnes (33) d'un panneau diviseur, comprenant une tête (2) destinée à venir s'appliquer sur un côté du premier élément composant (37), la tête (2) présentant des surfaces d'introduction (3) pour une clé, une tige (4) formée sur la tête (2) et destinée à passer simultanément par une ouverture respective (43, 46) des deux éléments composants (35, 37), ainsi qu'un premier verrou (5) formé à l'extrémité libre de la tige et destiné à se disposer à l'arrière du second élément composant (35), caractérisé en ce qu'un second verrou (6) est formé sur la tige (4) entre la tête (2) et le premier verrou (5), en étant décalé angulairement par rapport au premier verrou (5) et écarté en direction axiale aussi bien de la tête (2) que du premier verrou (5).

2. Elément de connexion selon la revendication 1, caractérisé en ce que les deux verrous (5, 6) sont décalés l'un par rapport à l'autre de 90°, et en ce que le second verrou (6) est plus long que le premier.

3. Elément de connexion selon la revendication 2, caractérisé en ce que la première section de tige (7) présente entre le second verrou (6) et la tête (2) deux nez (20) diamétralement opposés qui sont décalés angulairement par rapport au second verrou (6).

4. Elément de connexion selon la revendication 3, caractérisé en ce que la surface périphérique de la première section de tige (7) présente sur un côté une première section (23) en forme de segment de cercle cylindrique se raccordant à chacun des nez (20), dont le diamètre est supérieur à la longueur du premier verrou (5), et en ce que la seconde section de surface périphérique (22) se raccordant sur l'autre côté aux nez (20) est de diamètre plus faible que les premières sections (23).

5. Elément de connexion selon l'une quelconque des revendications 1 à 4, caractérisé en ce que le second verrou (6) comprend deux surfaces en coin (28) diamétralement à l'opposé l'une de l'autre et tournées vers la tête (2).

6. Elément de connexion selon l'une quelconque des revendications 1 à 5, caractérisé en ce que la surface (17) du premier verrou (5) qui est tournée vers le second verrou (6) est sensiblement sphérique.

7. Elément de connexion selon l'une quelconque des revendications 1 à 6, caractérisé en ce que le premier verrou (5) va en se réduisant en forme de coin en direction axiale aussi bien en largeur qu'en longueur.

8. Elément de connexion selon l'une quelconque des revendications 1 à 7, caractérisé en ce que les surfaces d'insertion de clé sont constituées sous forme d'un multi-pans interne (33), et la tête (2) sous forme d'un disque arrondi.

9. Panneau diviseur comprenant plusieurs colonnes de support (33) et des corps (32) pouvant être montés de façon amovible entre celles-ci et constituées de deux parois latérales (37) reliées à une plaque inférieure (38) et à une paroi arrière (39), les parois latérales (37) étant reliées aux colonnes (33) par au moins un élément de connexion (1) selon l'une des revendications 1 à 8.

10. Corps ou compartiment (32) destiné à un panneau diviseur, comprenant deux parois latérales (37) qui sont fixées à une plaque inférieure 38 et à une paroi arrière (39), les deux parois latérales (37) étant constituées pour être fixées au moyen d'au moins d'un élément de connexion (1) selon la revendication 3, les parois latérales (37) présentant au moins une ouverture (36) à pourtour symétrique par rapport au centre (53) de l'ouverture et telle que :

a) sa plus grande largeur s'étend horizontalement parallèlement à la plaque inférieure (38) ;

b) partant de la largeur la plus grande et par rapport à la verticale, la périphérie est plus resserrée sur un côté que sur l'autre ;

c) le côté le plus resserré se prolonge par un segment de cercle (52) concentrique par rapport au centre (53) de l'ouverture et qui coupe la verticale.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

EP 0 326 522 B1

Fig. 14

Fig. 15